# EUROPEAN PATENT SPECIFICATION

(11) **EP 2 389 274 B1**
(45) Date of publication and mention of the grant of the patent: **14.08.2013**
(21) Application number: 10704169.1
(22) Date of filing: 21.01.2010
(51) Int. Cl.: B24B 15/02, B24B 15/03, B24B 15/04, B23C 3/05

(54) **DEVICE FOR RE-MACHINING A SAFETY VALVE**
VORRICHTUNG ZUR AUFARBEITUNG EINES SICHERHEITSVENTILS
DISPOSITIF POUR LA REMISE A NEUF D'UNE SOUPAPE DE SECURITE

(30) Priority: 21.01.2009 GB 0900949
(43) Date of publication of application: 30.11.2011
(73) Proprietor: Industrial Valve Services PTE LTD, Singapore 068894 (SG)
(72) Inventor: SPERRING, Christopher, Morriston Swansea SA6 6AR (GB)
(74) Representative: Austin, Hedley William
(86) International application number: PCT/GB2010/050080
(87) International publication number: WO 2010/084346

(56) References cited:
- JP-A- 2005 177 922
- US-A- 3 069 819
- US-A- 3 172 241

## Description

The present invention relates to the field of machining of safety valves, and in particular apparatus for re-machining and reconditioning of safety valves, and the use of such apparatus.

Safety valves, especially for use in high pressure applications, such as in industrial plants operating with high pressure steam, operate in harsh environments. In use, therefore, co-operating surfaces of the valve, namely a sealing disc of an actuating member and a valve seat, may deteriorate through general wear and tear, or corrosion. As these co-operating surfaces deteriorate, they may deform and/or collect residue or deposits from a fluid passing through the valve during operation. Such deformation and/or deposits may cause contact between the co-operating surfaces to be imperfect, thus reducing the sealing performance provided by the valve. It therefore becomes necessary to recondition the valve apparatus in order to renew the profile of these co-operating surfaces such that they contact one another in a more complete manner thus providing an improved seal.

Conventionally, equipment including the valve apparatus must be disassembled at least to the extent that the valve apparatus can be removed from the surrounding equipment. Once removed from the surrounding equipment the surfaces of the valve apparatus can be machined by conventional machining apparatus by mounting the individual components of the valve apparatus within the conventional machining apparatus.

Where vessels or piping systems operate under extreme conditions, such as high pressures and high temperatures, they are generally provided with safety valves. For security and functional reasons, these safety valves are generally welded into the system.

After welding, the joints must be heat treated and x-rayed to ensure that no imperfections or stress concentrators are retained within the joints which could lead to subsequent catastrophic failure of the apparatus. It is, therefore, difficult to disassemble the valve assembly, especially the valve seat, because this onerous process must be followed each time the apparatus is reassembled. The actuator of the valve can readily be disassembled and machined elsewhere if necessary. However, the valve seat is, conventionally, reconditioned *in situ* by hand.

In the extreme environments in which safety valves operate, it is critical that exceptionally close contact is made between sealing surfaces of the valve. The tolerances associated with this fit, in terms of smoothness and flatness between cooperating components, are measured in terms of microns and lightbands, and are typically about 3 micrometres.

Any imperfection that is present in one of the surfaces provides the superheated steam with a point focus at which pressure will be exerted and material will subsequently be removed due to mechanical wear by the high pressure steam. The valve will subsequently fail.

The hand machining process to recondition a surface comprising a blemish in the order of 0.5mm typically takes approximately 1 day to complete. The process is a multi stage process starting with a coarse grit followed by subsequently finer grits ending with a 3 micron diamond paste in order to achieve a mirror finish. These grits are applied to a lapping block which enables the technician to achieve a flat profile. The process must be repeated for the actuating member; however, the latter may be disassembled and carried out remotely from the safety equipment.

Portable lathes are known, which can be mounted on shafts to re-turn shafts and roll journals and may be used to cut o-ring grooves or repair turbine spindles. However, although such in situ machining may occur, the apparatus used to carry out the machining is restricted in its functionality. The reconditioning of valve surfaces typically takes a series of operations which cannot be undertaken by a conventional portable lathe. The finish achieved by a lathe would be inaccurate and, therefore, inadequate for the tolerances required for safety valves.

Conventional machines that are capable of some of the multifunctional machining processes required to re-condition a safety valve are very large. The bulk of these machines (typically of the order 0.5 tonne to several tonnes) prevents them from being transportable. They could not, therefore, be used *in situ* to recondition a valve seat face without removing the valve from its operational location; they thus still retain the disadvantageous need for re-welding etc. Furthermore, none of these conventional machines actually achieve each of the functions required for re-machining and reconditioning safety valves namely cutting, turning, grinding, lapping and polishing.

Safety valves are generally serviced every 18 months to 3 years in order to maintain the certification to the required standard. Consequently, reconditioning of these valves is an on-going issue that is currently very labour intensive. It is desirable to provide machining apparatus to overcome some of the aforementioned disadvantages.

JP-A-2005177922 discloses an apparatus for re-machining safety valves, the apparatus having a gear box having a first centre of rotation associated therewith, the gear box being configured to receive a driving torque and a removable accessory assembly for machining a safety valve.

According to the invention the apparatus for re-machining safety valves includes a secondary gear box having a second centre of rotation associated therewith, coupled to the first gearbox and configured to be driven thereby;
coupling means for transferring the drive torque from the first gear box to the second gear box and configured to define the location of the secondary centre of rotation relative to the first centre of rotation; and
a removable accessory assembly, coupled to the secondary gear box, for carrying out a respective machining (cutting, turning, grinding, lapping or polishing) operation to recondition a surface of a safety valve.

The apparatus according to the invention can provide multiple functionality, whereby the accuracy of the reconditioning operation can be significantly enhanced. The apparatus is installed *in situ* on the valve body and a datum is set up. As the different cutting, grinding and polishing accessories are interchangeable, a single piece of equipment can be taken into the field of operation and used to recondition the valve without the need of very labour intensive manual finishing techniques.

The present invention further comprises a method of re-machining a safety valve, which comprises providing apparatus according to the invention, attaching the removable assembly to the second gearbox, and carrying out a respective machining operation by means of the accessory assembly so as to recondition a surface of the safety valve.

As previously indicated, the safety valve is preferably welded to a high temperature/ high pressure vessel so that the machining operation is therefore carried out *in situ,* without removal of the valve.

The coupling means may comprise a rotatable body, configured to be rotated by the first gear box. A clamping member may be attached to the rotatable body; such a clamping member may have a concave, lipped edge for receiving an adaptor plate and means for securely attaching the clamping member to the rotatable body. The coupling means may further comprise an adaptor plate, configured to be received by the clamping member. The adaptor plate may have a hole formed therein for receiving a locating collar of the second gearbox, the hole being offset from the centre of the adaptor plate so that angular displacement of the adaptor plate translates the centre of rotation of the second gearbox received thereby.

The accessory assembly may be a cutting or turning tool assembly, a grinding tool assembly (for example, comprising a pneumatically driven grinding tool), and/or a lapping tool assembly.

The apparatus may be is configured to be mounted in situ, on equipment which includes the safety valve to be re-machined. Alternatively, it may be mounted remotely from such equipment and may comprise a lapping tool assembly that is configured to receive an actuating component of a safety valve. Such a lapping tool assembly comprises two lapping rings positioned concentrically on a lapping platter of the lapping tool assembly, such that the space between the lapping rings corresponds to a dimension of a protrusion of the actuating component. Furthermore, the lapping tool assembly may comprise a guide arm for engaging with and rotatably driving the actuating component to effect lapping of a surface thereof.

The apparatus may be configured to be portable (that is, it may be disassembled for packing in packing cases or the like, For re-assembly when needed for use in a method according to the invention..

Preferred features of the present invention will now be described, by way of example only, with reference to the accompanying drawings, in which:
Figure 1 is an isometric view of safety valve re-machining apparatus mounted in situ on a safety valve;
Figure 2 illustrates primary gearbox of the apparatus of Figure 1;
Figure 3 illustrates a secondary gearbox of the apparatus of Figure 1;
Figure 4 illustrates a grinding tool assembly for use with the apparatus of Figure 1;
Figure 5 illustrates a lapping tool assembly for use with the apparatus of Figure 1;
Figure 6 is an isometric view of a disc lapping assembly installed on the apparatus of Figure 1; and
Figure 7 is a side view of the apparatus shown in Figure 6.

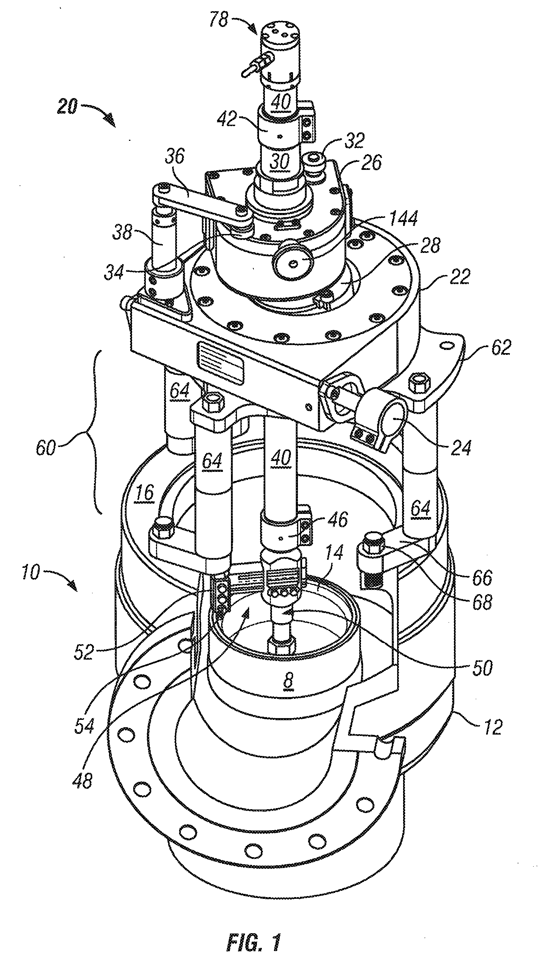

Figure 1 illustrates a safety valve 10 comprising a valve body member 12 within which is located a valve seat 8 for receiving a disc of an actuable member (not shown), the valve seat 8 having a seat face 14 for interacting with the disc of the actuable member to form a seal therebetween. As illustrated, apparatus 20 for re-machining the safety valve 10 is mounted on an upper surface 16 of the valve body member 12.

A primary gearbox 22 is provided with coupling arrangement 24 for receiving a drive torque from an external drive (not shown). A secondary gearbox 26 is mounted upon the primary gearbox 22. The secondary gearbox 26 is coupled to the primary gearbox 22 using a clamp 28. A main drive shaft 30 extends through the centre of rotation of the secondary gearbox 26 and is rotated about this centre of rotation when its gears are driven by the external torque drive.

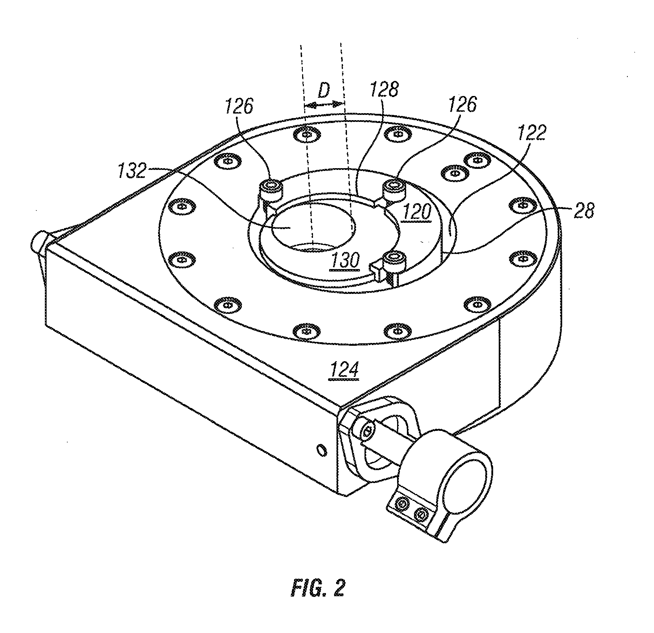

The clamp 28 (as shown in Figure 2) comprises a crescent shaped clamping member 120 which sits within a recess 122 formed on the upper surface of the rotating member 124 of the primary gearbox 22. The clamping member 28 is secured in place by a plurality of fixings 126 (in this example, three fixings 126 are shown).

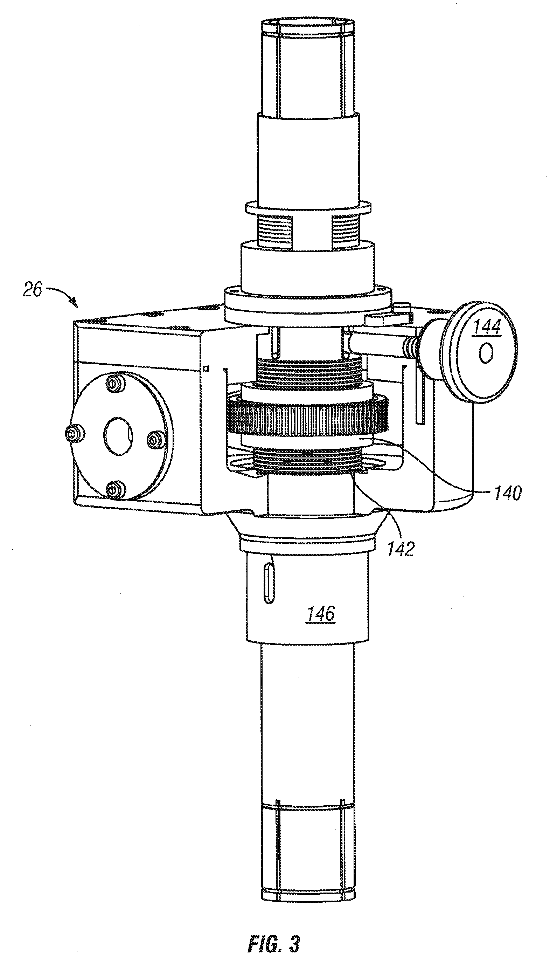

An internal curved edge 128 of the crescent shaped clamping member 120 is provided with a lipped profile such that a circular plate 130 can be located under the lip. In tightening fixings 126 so that the clamping member 120 is secured, the circular plate 130 is clamped and therefore also secured in place. The circular plate 130 is provided with a bore 132 at an eccentric location thereof. The bore 132 is so dimensioned to receive a locating collar 146 (shown in Figure 3) of the second gearbox 26 therewithin.

By altering the orientation of the circular plate 130 with respect to the clamping member 120, and subsequently tightening the fixings 126, the axis of the centre of rotation of the secondary gearbox 26 and, therefore, the drive shaft 30 can be translated to an eccentric location with respect to the main gearbox 22.

The clamp 28, therefore, permits the secondary gearbox 26 to be shifted laterally with respect to the primary gearbox 22. In this way, the centres of rotation of the respective gearboxes 22, 26 can be offset from one another by a distance, say D.

When the primary gearbox 22 and the secondary gearbox 26 are aligned so that their centres of rotation coincide, (i.e. D=0) the main drive shaft 30 is rotated at the centre of rotation of the primary gear box 22. However, when the centres of rotation of the respective gear boxes 22, 26 are offset from one another using clamping 28, the main drive shaft 30 describes an orbital motion during operation of the apparatus 20. In other words, the main drive shaft 30 rotates about the centre of rotation of the secondary gearbox 26 but the secondary gearbox 26 itself is rotated at a distance D about the centre of rotation of the primary gearbox 22.

Returning to Figure 1, the secondary gearbox 26 is provided with a vertical feed drive gear 32 which is configured to interact with a gear 34 mounted via an arm 36 and pillar 38 onto the primary gearbox 22. During the interaction between gears 32 and 34, the gear 32 is rotated, causing an internal mechanism of the secondary gearbox 26 to ratchet so that the main drive shaft 30 is progressively shifted in a vertical (ie longitudinal) direction with respect to the secondary gearbox 26.

Figure 3 shows the internal mechanism of the secondary gearbox which comprises a toothed component 140 to be rotated about a finely threaded member 142 of main drive shaft 30 such that longitudinal translation or displacement can be achieved. After a period of continuous operation, the extent of the longitudinal displacement of the main drive shaft 30 may be significant. It is desirable to implement a means of rapidly returning the main drive shaft 30 to its original location to begin a subsequent cut. In order to achieve this rapid return, a quick-release mechanism is provided, whereby button 144 is actuated, to release a locking mechanism such that the main drive shaft 30 can be translated longitudinally without needing to undertake a laborious rotation process to reverse the travel along the thread of component 142 of main drive shaft 30.

Returning to Figure 1, the main drive shaft 30 is hollow, and is configured to receive a feed shaft 40 therewithin. The feed shaft 40 is secured in place relative to the main drive shaft 30 through the action of clamp 42 located at an upper end of the main drive shaft 30 as illustrated in the figures and a further clamp (not shown) located at a lower end of the main drive shaft 30 within the secondary gear box 26.

A further clamp 46 is located at a lower end of the feed shaft 40 for securing a cutting accessory to the feed shaft 30. The cutting accessory of the first embodiment, illustrated in Figure 1, is a cutting tool assembly 48. The cutting tool assembly 48 preferably comprises a tool post 50 having a tool holder 52 mounted therewithin, the tool holder being configured to accommodate a cutting tool 54.

It is necessary to be able to accurately position the accessory, in this example the cutting tool assembly 48, relative to a surface to be cut, in this example the valve seat face 14. In order to achieve this, the apparatus 20 comprises a mounting assembly 60. The mounting assembly 60 comprises a support surface 62 upon which the primary gear box 22 is mounted. A plurality of legs 64, in this example four, are attached to the underside of the support surface 62, each respective leg 64 comprising a foot 66 connected at a distal portion of the leg. Each foot 66 is configured to be pivoted about a central axis of the respective leg 64. A fastener 68 such as a threaded bolt and nut is provided at a distal end of each respective foot, the fastener 68 being configured to be connected to the upper surface 16 of the valve body 12.

In a first embodiment (as illustrated in Figure 1), during operation, a drive motor (not shown) for generating torque is connected to the coupling arrangement 24. The rotary motion provided thereby is translated into a rotary motion about a longitudinal axis passing through the centre of rotation of the primary gearbox 22 through a gear assembly located therewithin. In this embodiment, the secondary gearbox 26 is not offset from the primary gearbox 22. In other words, the centres of rotation of the two gearboxes 22, 26 are aligned and the drive shaft 30 and, consequently, the feed shaft 40 are caused to rotate about a central longitudinal axis of the apparatus 20. The longitudinal axis passes through centres of rotation of each of the primary and secondary gearboxes 22, 26. Upon application of torque via the coupling arrangement 24; the secondary gearbox 26, the main drive shaft 30, and the feed shaft 40 together with the cutting tool assembly 48 are all rotated about the central longitudinal axis of the apparatus 20. The vertical feed drive gear 32 is offset from the centre of rotation of the secondary gearbox 26 and is rotated about the centre of rotation of the secondary gearbox 26 during operation. Once per revolution of the secondary gearbox 26 the vertical feed drive gear 32 comes into contact with gear 34. Gear 32 is rotated by this interaction and a ratchet mechanism 140 is actuated such that the main drive shaft 30 is progressively displaced longitudinally towards the valve seat face 14. As the main drive shaft 30 is so displaced, the feed shaft 40 connected thereto and the cutting tool assembly 48 are also urged towards the valve seat face 14. Consequently, the cutting tool 54 is urged into the valve seat face 14 and material is subsequently removed from the surface of the valve seat face 14 as the secondary gearbox 26 is rotated.

The radial extent of material to be removed may be too great to be achieved in a single cut. So once a first cut has been made the release button 144 is actuated and the main drive shaft 30 is returned to a longitudinal location above the valve seat face 14. The cutting tool assembly 48 is then adjusted to reposition the cutting tool 54 at a greater radial extent and a subsequent cut is undertaken.

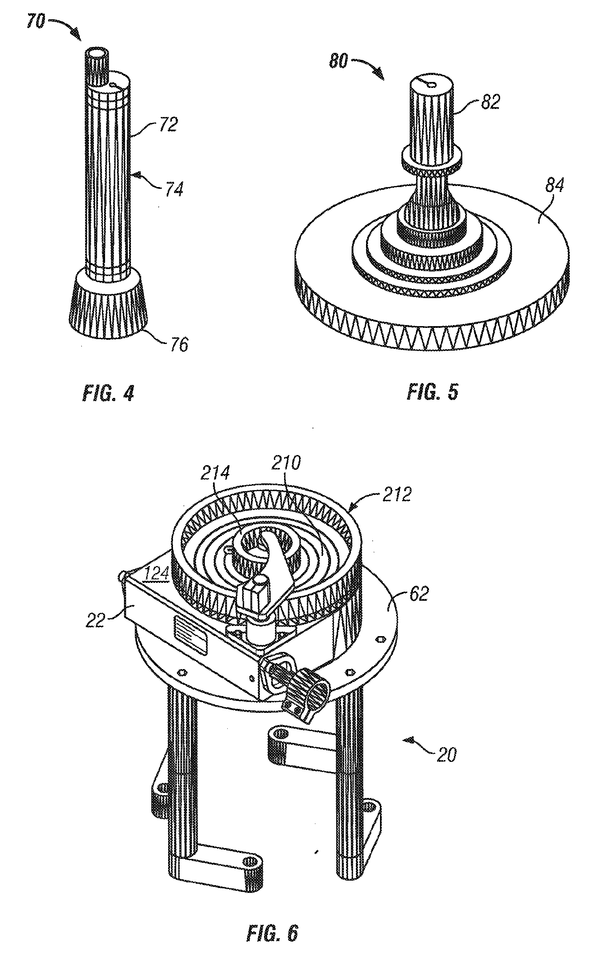

In a second embodiment, the apparatus 20 is used to perform a grinding operation. The cutting tool assembly 48 from the first embodiment is replaced with a grinding tool assembly 70 as illustrated in Figure 4. The grinding tool assembly 70 comprises a tool post 72 for connecting the grinding tool assembly to the feed shaft 40 using the accessory clamp 46. A grinding motor 74 is accommodated within the tool post 72. The grinding motor 74 is driven pneumatically and receives an air supply from coupling member 78 located at a remote end of the feed shaft 40 (see Figure 1).

The pneumatically driven grinding motor 74 causes a grinding wheel 76 connected to the motor 74 to be rotated about a longitudinal axis of the tool post 72.

In operation, the secondary gearbox 26 is moved laterally relative to the primary gearbox 22. The fixings 126 are released to unlock clamping means 28 and circular plate 130 is rotated within the crescent shaped clamping member 120 in order to displace the secondary gearbox 26 such that the grinding wheel 76 is positioned above a valve surface to be ground. The fixings 126 are then tightened to secure the clamp 28 and a relative offset, say D, is achieved between the centres of rotation of the primary and secondary gearboxes 22, 26. During operation of the apparatus 20 the secondary gearbox 26, and the main shaft 30, feed shaft 40 and grinding tool assembly 70, are rotated around the central longitudinal axis of the primary gear box 22 at a distance determined by the offset [D]. In addition to this rotary motion, the grinding wheel 76 of the grinding tool assembly 70 is rotated about its own axis by virtue of the pneumatic drive of the grinding motor 74. Consequently, the grinding wheel 76 describes an orbital motion and, when brought into contact with a surface to be ground (eg valve seat face 14) removes material therefrom. As in the previous embodiment, once per revolution of the secondary gearbox 26, the vertical feed drive gear 32 comes into contact with gear 34 causing rotary displacement of gear 32 so that the rotating internal ratchet mechanism 140 of secondary gearbox 26 causing drive shaft 30 to travel in a vertical direction to displace the feed shaft 40 and thus cause a further layer of material to be removed from the surface to be ground.

Because distance D can be changed, the apparatus is particularly flexible and can be configured to recondition a large range in size of safety valve seats 8. The apparatus can be scaled up to accommodate larger valve seats than can be machined by a given size of circular plate 130. In the smaller range, the size of valve seat face 14 that can be reconditioned is only restricted by the diameter of the grinding tool 76. :
In the smallest example, the grinding tool would rotate about its own axis and that would correspond with a central axis of the main gearbox. There would be no orbital motion.

A third embodiment of the apparatus of Figure 1 comprises a lapping and/or polishing assembly 80 as illustrated in Figure 5. The lapping assembly 80 comprises a tool post 82 having connected thereto a lapping plate 84.

The tool post 82 is inserted into the feed shaft 40 and secured thereto by tightening accessory clamp 46. The main drive shaft 30 together with the feed shaft 40 are offset from the central axis of the apparatus 20 by releasing the clamp 28 in order to position the centre of rotation of the secondary gearbox 26 at a location offset, say a distance D, from that of the primary gearbox 22. In other words, the centres of location of these two gearboxes are not coincident so that the secondary gear box 26, together with the shafts 30, 40 and the lapping assembly 80 travel around the longitudinal axis of the apparatus 20 at a distance D, rather than rotating about their own axes.

In operation, the lapping plate 84 is positioned over the surface to be polished by adjusting the offset, D, of the centres of rotation of the two gearboxes 22, 26 using clamp 28 as described above. The vertical location of the feed shaft 40 and, therefore, the lapping assembly 80 is adjusted by releasing clamps 42 and the lower clamp (not shown), relocating the secondary gearbox 26 and re-tightening the latter clamps once a desired location is established. Fine adjustment of the vertical location can be achieved by the manual adjustment of the vertical feed drive gear 32 to bring the lapping plate 84 into contact with the surface to be lapped and polished. The lapping plate 84 is charged with particulate matter, or grit, in a conventional manner prior to bringing the lapping plate 84 into contact with the surface to be polished.

Starting with coarse grit and working in the range of say 200 microns, down in various stages to finally 3 microns (provided by silicon carbide patarticles), polishing to a mirror finish can be achieved. By using the apparatus of the present invention, the number of different stages that are used can be reduced in number. For example, an overall process that would have taken an entire day or more when lapping and polishing manually, for example to remove a blemish of 0.5mm depth, can be achieved in less than an hour using exemplary apparatus according to the invention.

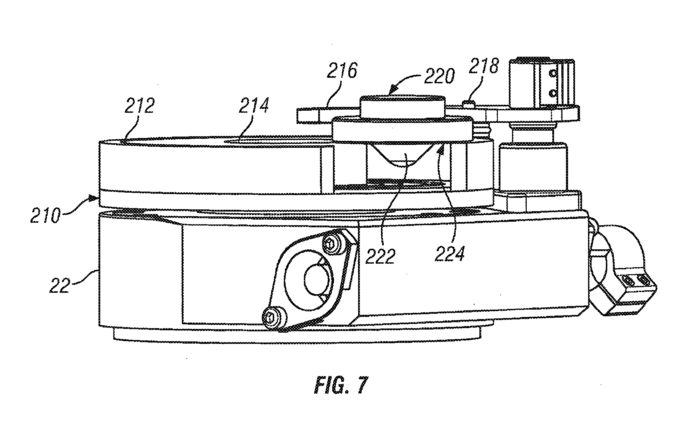

Figures 6 and 7 illustrate a fourth embodiment of the apparatus 20. In the fourth embodiment, the apparatus is configured to lap and polish a valve disc from the actuating member of the valve.

The secondary gearbox 26 is removed from the primary gearbox 22 and a lapping platter 210 is installed onto the upper surface 124 of the main gearbox 22. Lapping rings 212, 214 are mounted on the lapping platter 210 and are chosen to accommodate the size of the particular valve disc to be reconditioned.

As illustrated in Figure 7 a valve disc 220 is supported by the inner lapping ring 214 and the outer lapping ring 212 at diametrically opposite regions of the disc 220. This enables a protrusion 222 of the disc 220 to fall between the inner and outer lapping rings 212, 214 whilst maintaining contact between a surface to be ground 224 and an upper surface of each respective ring 214, 212.

A guide arm 216 is mounted on the main gearbox 22. The guide arm 216 comprises drive member 218 which, in operation is brought into contact with valve disc 220 and causes the valve disc 220 to be rotated about its own central axis. This rotation of valve disc 220 causes surface 224 to come into moving contact with upper surfaces of lapping rings 212 and 214. Lapping abrasives are charged as described above to the faces of lapping rings 212 and 214 such that lapping of surface 224 is achieved. Valve disc 220 therefore effectively undergoes orbital motion with respect to a central longitudinal axis of the primary gear box 22.

Apparatus 20 is mounted on a floor surface to undertake these lapping processes. The upper part of the valve is disassembled and the valve disc 220 is mounted onto apparatus 20.

The apparatus 20 and all its attachments can be readily disassembled and packed into three portable packing cases so that the apparatus 20 can readily be transported to any geographic location by a technician.

In summary, a multi-functional apparatus is provided for reconditioning the profile of a seat face and a valve disc of a safety valve. The multi-functionality includes cutting, grinding and lapping operations. The apparatus is portable and can be taken on site and mounted in situ on equipment housing the safety valve.

## Claims

1. Apparatus for re-machining safety valves (10) including:
a first gearbox (22) having a first centre of rotation associated therewith, the first gearbox being configured to receive a driving torque; **characterised in that** the apparatus comprises
a second gearbox (26) having a second centre of rotation associated therewith, coupled to the first gearbox and configured to be driven thereby;
coupling means (28) for transferring the drive torque from the first gearbox to the second gearbox and configured to define the location of the second centre of rotation relative to the first centre of rotation; and
a removable accessory assembly (48,70,80), coupled to the second gearbox for carrying out a respective machining operation to recondition a surface of a safety valve.

2. Apparatus according to Claim 1, wherein the coupling means comprises:
a rotatable body (30), configured to be rotated by the first gear box;
a clamping member (120) attached to the rotatable body, the clamping plate having a concave, lipped edge (128) for receiving a plate (130) and fixing means (126) for securing the clamping member to the rotatable body; and
an adaptor plate (130), configured to be received by the clamping member, having a hole (132) formed therein for receiving a locating collar (146) of the second gearbox, the hole being offset from the centre of the plate so that angular displacement of the plate translates the centre of rotation of the second gearbox received thereby.

3. Apparatus according to Claim 1 or Claim 2, wherein the accessory assembly is a cutting tool assembly (48).

4. Apparatus according to Claim 1 or Claim 2, wherein the accessory assembly is a grinding tool assembly (70).

5. Apparatus according to Claim 4, wherein the grinding tool assembly comprises a grinding tool configured to be driven pneumatically.

6. Apparatus according to Claim 1 or Claim 2, wherein the accessory assembly is a lapping tool assembly (80).

7. Apparatus according to any preceding claim, wherein the apparatus is configured to be mounted in situ, on equipment comprising the safety valve to be re-machined.

8. Apparatus according to Claim 6, wherein the lapping tool assembly is configured to receive an actuating member (220) of a safety valve.

9. Apparatus according to Claim 8, wherein the lapping tool assembly comprises two lapping rings positioned concentrically on a lapping platter (210) of the lapping tool assembly such that the space between the lapping rings corresponds to a dimension of a protrusion (222) of the actuating member.

10. Apparatus according to Claim 9, wherein the lapping tool assembly comprises a guide arm (216) for engaging with and rotatably driving the actuating member to effect lapping of a surface (224) thereof.

11. Apparatus according to any preceding claim, wherein the apparatus is configured to be portable.

12. A method of re-machining a safety valve (10), which comprises providing apparatus according to any of claims 1 to 11, attaching the removable accessory assembly to the second gearbox, and carrying out a respective machining operation by means of said accessory assembly so as to recondition a surface of the safety valve.

## Patentansprüche

1. Vorrichtung zum Nachbearbeiten von Sicherheitsventilen (10), umfassend:
ein erstes Getriebe (22) mit einem damit verbundenen ersten Drehzentrum, wobei das erste Getriebe dazu gestaltet ist, ein Antriebsdrehmoment zu erhalten, **dadurch gekennzeichnet, dass** die Vorrichtung Folgendes umfasst:
ein zweites Getriebe (26) mit einem damit verbundenen zweiten Drehzentrum, das mit dem ersten Getriebe gekoppelt ist und zum Antrieb dadurch gestaltet ist;
ein Kopplungsmittel (28) zur Übertragung des Antriebsdrehmoments von dem ersten Getriebe zu dem zweiten Getriebe, das dazu gestaltet ist, die Stelle des zweiten Drehzentrums in Bezug auf das erste Drehzentrum zu definieren; und
einen abnehmbaren Zubehöraufbau (48, 70, 80), der mit dem zweiten Getriebe gekoppelt ist, um eine jeweilige Bearbeitungstätigkeit auszuführen, um eine Oberfläche eines Sicherheitsventils zu überholen.

2. Vorrichtung nach Anspruch 1, wobei das Kopplungsmittel Folgendes umfasst:
einen drehbaren Körper (30), der zur Drehung durch das erste Getriebe gestaltet ist;
ein Klemmelement (120), das an dem drehbaren Körper angebracht ist, wobei die Klemmplatte eine konkave lippige Kante (128) zur Aufnahme einer Platte (130) und Fixiermittel (126) zur Befestigung des Klemmelements an dem drehbaren Körper aufweist; und
eine Adaptorplatte (130), die zur Aufnahme durch das Klemmelement gestaltet ist und eine darin gebildete Öffnung (132) aufweist, um einen Anordnungskragen (146) des zweiten Getriebes aufzunehmen, wobei die Öffnung so von der Mitte der Platte versetzt ist, dass eine winkelige Verschiebung der Platte das Drehzentrum des dadurch aufgenommenen zweiten Getriebes versetzt.

3. Vorrichtung nach Anspruch 1 oder Anspruch 2, wobei der Zubehöraufbau ein Schneidewerkzeugaufbau (48) ist.

4. Vorrichtung nach Anspruch 1 oder Anspruch 2, wobei der Zubehöraufbau ein Schleifwerkzeugaufbau (70) ist.

5. Vorrichtung nach Anspruch 4, wobei der Schleifwerkzeugaufbau ein Schleifwerkzeug umfasst, das dazu gestaltet ist, pneumatisch angetrieben zu werden.

6. Vorrichtung nach Anspruch 1 oder Anspruch 2, wobei der Zubehöraufbau ein Läppwerkzeugaufbau (80) ist.

7. Vorrichtung nach einem der vorhergehenden Ansprüche, wobei die Vorrichtung dazu gestaltet ist, an Ort und Stelle an einer Einrichtung, die das nachzubearbeitende Sicherheitsventil umfasst, angebracht zu werden.

8. Vorrichtung nach Anspruch 6, wobei der Läppwerkzeugaufbau dazu gestaltet ist, ein Betätigungselement (220) eines Sicherheitsventils aufzunehmen.

9. Vorrichtung nach Anspruch 8, wobei der Läppwerkzeugaufbau zwei Läppringe umfasst, die derart konzentrisch an einer Läppschale (210) des Läppwerkzeugaufbaus positioniert sind, dass der Raum zwischen den Läppringen einer Abmessung eines Vorsprungs (222) des Betätigungselements entspricht.

10. Vorrichtung nach Anspruch 9, wobei der Läppwerkzeugaufbau einen Führungsarm (216) umfasst, um mit dem Betätigungselement einzugreifen und es drehend anzutreiben, um das Läppen einer Oberfläche (224) davon zu bewirken.

11. Vorrichtung nach einem der vorhergehenden Ansprüche, wobei die Vorrichtung derart gestaltet ist, dass sie tragbar ist.

12. Verfahren zum Überarbeiten eines Sicherheitsventils (10), umfassend das Bereitstellen einer Vorrichtung nach einem der Ansprüche 1 bis 11, das Anbringen des abnehmbaren Zusatzaufbaus an dem zweiten Getriebe, und das Ausführen einer jeweiligen Bearbeitungstätigkeit durch den Zusatzaufbau, um eine Oberfläche des Sicherheitsventils zu überholen.

## Revendications

1. Appareil destiné à réusiner des soupapes de sûreté (10) comprenant:
rotation associé à celle-ci, la première boîte d'engrenages étant
rotation associé à celle-ci, couplée à la première boîte d'engrenages et configurée pour être entraînée par celle-ci;
configuré pour définir l'emplacement du second centre de rotation par rapport au premier centre de rotation; et
respective pour reconditionner une surface d'une soupape de sûreté.

2. Appareil selon la revendication 1, dans lequel le moyen de couplage comprend :
un corps rotatif (30), configuré pour être tourné par la première boîte
un élément de serrage (120) fixé sur le corps rotatif, la plaque de serrage présentant un bord concave et à rebord (128) pour recevoir un plateau serrage au corps rotatif; et
une plaque adaptatrice (130), configurée pour être reçue par l'élément de serrage, présentant un trou (132) formé dedans pour recevoir un collier de décalé du centre de la plaque de façon à ce que le déplacement angulaire de la plaque translate le centre de rotation de la seconde boîte

3. Appareil selon la revendication 1 ou 2, dans lequel le montage

4. Appareil selon la revendication 1 ou 2, dans lequel le montage

5. Appareil selon la revendication 4, dans lequel le montage d'outil de meulage comprend un outil de meulage configuré pour être entraîné de manière pneumatique.

6. Appareil selon la revendication 1 ou 2, dans lequel le montage

7. Appareil selon l'une quelconque des revendications précédentes, dans uipement comprenant la soupape de sûreté à réusiner.

8. Appareil selon la revendication 6, dans lequel le montage d'outil de soupape de sûreté.

9. Appareil selon la revendication 8, dans lequel le montage d'outil de rodage comprend deux bagues de rodage positionnées de manière

10. Appareil selon la revendication 9, dans lequel le montage d'outil de rodage comprend un bras de guidage (216) pour mettre en prise et entraîner en rotation l'élément d'actionnement pour effectuer le rodage

11. Appareil selon l'une quelconque des revendications précédentes, dans

12. Procédé destiné à réusiner une soupape de sûreté (10) qui comprend de ce de la soupape de sûreté.
